(19) Europäisches Patentamt
European Patent Office
Office européen des brevets

(11) **EP 4 088 921 B1**

(12) **EUROPEAN PATENT SPECIFICATION**

(45) Date of publication and mention
of the grant of the patent:
**06.09.2023 Bulletin 2023/36**

(21) Application number: **22170286.3**

(22) Date of filing: **27.04.2022**

(51) International Patent Classification (IPC):
**B29D 30/38** (2006.01)    **B29C 70/20** (2006.01)

(52) Cooperative Patent Classification (CPC):
**B29D 30/38;** B29D 2030/381; Y02T 10/86

(54) **METHOD OF MANUFACTURING RUBBER COMPOSITE AND METHOD OF MANUFACTURING TIRE**

VERFAHREN ZUM HERSTELLEN EINES GUMMIVERBUNDES UND VERFAHREN ZUM HERSTELLEN VON REIFEN

PROCÉDÉ DE FABRICATION D'UN COMPOSITE EN CAOUTCHOUC ET PROCÉDÉ DE FABRICATION D'UN PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2021 JP 2021080580**

(43) Date of publication of application:
**16.11.2022 Bulletin 2022/46**

(73) Proprietors:
• **Sumitomo Rubber Industries, Ltd.**
**Kobe-shi, Hyogo 651-0072 (JP)**
• **Sumitomo Electric Tochigi Co., Ltd.**
**Utsunomiya-shi, Tochigi 321-3231 (JP)**

(72) Inventors:
• **MATSUOKA, Akifumi**
**Utsunomiya-shi, 321-3231 (JP)**
• **YOSHIDA, Shinichi**
**Utsunomiya-shi, 321-3231 (JP)**
• **MIAO, Dong**
**Kobe-shi, 651-0072 (JP)**
• **MISAKI, Momoka**
**Kobe-shi, 651-0072 (JP)**

(74) Representative: **Boult Wade Tennant LLP**
**Salisbury Square House**
**8 Salisbury Square**
**London EC4Y 8AP (GB)**

(56) References cited:
**EP-A1- 3 015 599       EP-A1- 3 459 721**
**JP-A- 2020 104 352**

**Description**

[Technical Field]

The present invention relates to a method of manufacturing a rubber composite, and a method of manufacturing a tire.

[Background Art]

In Patent Document 1, a radial tire for passenger cars that has a belt ply configured by embedding in rubber a number of single-wire steel cords having a circular cross section, is proposed, in which the diameter d of the cord is within a range from 0.35 mm to 0.70 mm, and the rubber thickness D between the cords measured perpendicularly to the longitudinal direction of the cord is within a range from 0.30 mm to 1.20 mm.

[Related Art Documents]

[Patent Documents]

[Patent Document 1] Japanese Utility Model Application S61-113799 (Japanese Laid-open Utility Model Application S63-19404) related to microfilm
[Patent document 2] EP 3 015 599 A1, relating to manufacture of rubber sheets for tyre production, and discloses the features of the preamble of independent claim 1.

[Summary of the Invention]

[Problem to be Solved by the Invention]

In recent years, from the viewpoint of improving fuel efficiency of automobiles, tires are required to have light weights and to have low rolling resistance. In order to achieve weight reduction of tires, as the cord used in a rubber composite as a reinforcing layer of the tire, instead of a steel cord of twisted wires, use of a single-wire steel cord having a smaller cord diameter has been studied to make the rubber composite thinner.
However, in the case of using a single-wire steel cord having a smaller cord diameter instead of a steel cord of twisted wires, in order to ensure the strength of the tire, it is necessary to increase the number of single-wire steel cords per unit width.
In addition, in the case of increasing the number of steel cords per unit width in the rubber composite, when manufacturing the rubber composite, the number of reels that supply steel cords needs to be increased. Therefore, there has been a problem such that expansion of a factory and improvement of facilities are required.
Therefore, the present disclosure has an object to provide a method of manufacturing a rubber composite, with which the number of reels used for supplying steel cords can be suppressed.

[Means for Solving Problem]

A method of manufacturing a rubber composite of the present disclosure includes:

a reel installation step of installing a reel group as multiple reels each having two or three steel cords wound, in a steel cord supplying device;
a pulling-out step of pulling out the two or three steel cords wound on each reel by the steel cord supplying device, from the reel group;
an arranging step of, for a steel cord group as multiple steel cords pulled out from the reel group, arranging the steel cords constituting the steel cord group in a row in a cross section perpendicular to a longitudinal direction of the steel cords; and
a rubber composite manufacturing step of embedding the steel cord group into rubber to manufacture the rubber composite,
wherein a steel cord is a single-wire steel cord, and
wherein when supplying to the arranging step, tension is applied to each of the steel cords that constitute the steel cord group, where the tension is greater than or equal to 6.0% and less than or equal to 9.0% of a breaking load per steel cord.

[Advantageous Effects of the Invention]

According to the present disclosure, the method of manufacturing the rubber composite, with which the number of reels used for supplying steel cords can be suppressed can be provided.

[Brief Description of the Drawings]

FIG. 1A is a diagram schematically illustrating a method of manufacturing a rubber composite according to one aspect of the present disclosure;
FIG. 1B is a diagram schematically illustrating another example configuration of the method of manufacturing the rubber composite according to one aspect of the present disclosure;
FIG. 2 is a diagram schematically illustrating a conventional method of manufacturing the rubber composite;
FIG. 3 is an explanatory diagram of a reel that can be favorably used in the method of manufacturing the rubber composite according to one aspect of the present disclosure;
FIG. 4 is an explanatory diagram of a winding pitch of steel cords;
FIG. 5 is a diagram illustrating a cross section of a steel cord;
FIG. 6A is an explanatory diagram of a composite roll in an arranging device used in an arranging step;
FIG. 6B is a side view of the composite roll illustrated in FIG. 6A;
FIG. 6C is an explanatory diagram of a guide plate included in the arranging device;
FIG. 7 is a cross sectional view of a rubber composite according to one aspect of the present disclosure; and
FIG. 8 is an explanatory diagram of a tire according to one aspect of the present disclosure.

[Embodiments for Carrying Out the Invention]

[Description of embodiments of the present disclosure]

First, embodiments of the present disclosure will be listed and described. In the following description, the same reference numerals are assigned to the same or corresponding elements, and for these elements, the same description will not be repeated.
(1) A method of manufacturing a rubber composite according to one aspect of the present disclosure includes:

a reel installation step of installing a reel group as multiple reels each having two or three steel cords wound, in a steel cord supplying device;
a pulling-out step of pulling out the two or three steel cords wound on each reel by the steel cord supplying device, from the reel group;
an arranging step of, for a steel cord group as multiple steel cords pulled out from the reel group, arranging the steel cords constituting the steel cord group in a row in a cross section perpendicular to a longitudinal direction of the steel cords; and
a rubber composite manufacturing step of embedding the steel cord group into rubber to manufacture the rubber composite,
wherein a steel cord is a single-wire steel cord, and
wherein when supplying to the arranging step, tension is applied to each of the steel cords that constitute the steel cord group, where the tension is greater than or equal to 6.0% and less than or equal to 9.0% of a breaking load per steel cord.

In the method of manufacturing the rubber composite according to the one aspect of the present disclosure, one reel is wound with two or three steel cords. Therefore, the number of reels can be half or one-third of the number of steel cords to be used. Therefore, the number of reels used for supplying steel cords can be suppressed, and without expanding the factory or improving facilities, the number of steel cords per unit width of the rubber composite can be increased.
The two or three steel cords 12 wound around each reel 11 may have the same length. In this case, loss of steel cords when replacing a reel can be suppressed.
Also, according to the method of manufacturing the rubber composite as one aspect of the present disclosure, as described above, by suppressing the number of reels to be used, the degree of freedom of locations where the reels are installed is increased. Therefore, in the arranging step, it is easy to select the incoming angle when inserting steel cords into the arranging device. As a result, scratches on the surface of the steel cord and peeling of the plated film can be suppressed. Also, fluctuation of the position of the steel cord upon being supplied to the arranging device can be suppressed, and hence, the steel cord can be supplied to a stable position.

Also, when supplying to the arranging step, by setting the tension to be applied to the steel cord to be greater than or equal to 6.0% of the breaking load per steel cord, the position of the steel cord is stabilized in the arranging step, and in the rubber composite manufacturing step, it becomes easier to be aligned with the desired position.

This is because as an appropriate tension is applied to the steel cord supplied to the arranging step, even when an external force is applied to the steel cord, the position becomes less likely to be displaced, and becomes stable.

As described above, by stabilizing the position of the steel cord, in the arranging step and in the rubber composite manufacturing step, variations in the position of the steel cord in the thickness direction of a rubber composite can be suppressed in the manufactured rubber composite.

The thickness of the rubber composite is a value obtained by adding a distribution width of the steel cord in the thickness direction of the rubber composite, to the rubber thickness determined in advance so that the steel cord can be embedded. Therefore, by suppressing the variation of the position of the steel cord in the thickness direction of the rubber composite, the thickness of the rubber composite can be suppressed, and it also becomes possible to reduce the weight of the rubber composite and of tires using the rubber composite.

Also, by stabilizing the position of the steel cord, in the arranging step and the like, there is no need to apply excessive force to the steel cord to arrange the steel cord. Therefore, scratches on the surface of the steel cord and peeling of the plated film can be suppressed.

However, if the tension per steel cord is increased excessively, the burden on the reel and the steel cord supplying device may be increased, and damage may occur. Therefore, it is favorable that the tension per steel cord is less than 9.0% of the breaking load per steel cord as described above.

(2) The reel may be wound with two steel cords.

By setting the number of steel cords wound around the reel to two, the length of each steel cord can be sufficiently long, and thereby, the frequency of reel replacement can be suppressed.

(3) A tension adjusting step may be provided between the pulling-out step and the arranging step, to adjust the tension of the steel cord.

By executing the tension adjusting step, the tension of the steel cord supplied to the arranging step can be controlled in a desired range easily.

(4) In the tension adjusting step, by changing the position of a tension adjusting roll in contact with the steel cord being conveyed, the tension of the steel cord may be adjusted.

By changing the position of the tension adjusting roll in contact with the steel cord being conveyed, the tension of the steel cord can be controlled easily. Also, by using the tension adjusting roll, occurrences of scratches on the surface of the steel cord can be suppressed.

(5) As the tension adjusting step, at least a first tension adjusting step and a second tension adjusting step may be included.

By having the tension adjusting step include at least the first tension adjusting step and the second tension adjusting step, namely, by executing the tension adjusting step in multiple steps, the tension of the steel cord can be controlled more precisely.

(6) The incoming angle as an angle between the steel cord before being inserted into the arranging step and the steel cord having been arranged at the arranging step may be greater than or equal to 40 degrees and less than or equal to 50 degrees.

By setting the incoming angle to be less than or equal to 50 degrees, scratches of the steel cord and peeling of the plated film can be particularly suppressed. Also, this feature can suppress occurrences of a phenomenon called twisted wire in which a steel cord comes to have a twist or the like.

By setting the incoming angle $\theta$ to be greater than or equal to 40 degrees, steel cords can be stably supplied to the arranging device.

(7) According to one aspect of the present disclosure, a method of manufacturing a tire includes a tire manufacturing step of manufacturing the tire using a rubber composite obtained by the method of manufacturing the rubber composite as described in any of (1) to (6).

According to the method of manufacturing the tire according to one aspect of the present disclosure, the rubber composite obtained by the method of manufacturing the rubber composite described above is used; therefore, the weight of the tire to be manufactured can be reduced. Also, according to the method of manufacturing the rubber composite described above, scratches of the surface of the steel cord and peeling of the plated film can be suppressed during the course of manufacturing the rubber composite. Therefore, the manufactured tired is excellent in adhesiveness between the steel cord and the rubber, and the durability of the tire using the rubber composite can be improved.

[Details of embodiments of the present disclosure]

According to the embodiments of the present disclosure (hereafter, referred to as "the present embodiment(s)"), the method of manufacturing the rubber composite; the method of manufacturing the tire; the rubber composite obtained by the manufacturing method described above; and specific examples of the tire, will be described below with reference to the drawings. Note that the present invention is not limited to these exemplifications, and is intended to include all claims and all modifications within the claims together with those considered as equivalents.

[Manufacturing method of the rubber composite]

The method of manufacturing the rubber composite of the present embodiment can have a reel installation step, a pulling-out step, an arranging step, and a rubber composite manufacturing step, as follows.

In the reel installation step, a reel group as multiple reels can be installed in a steel cord supplying device. Note that each of the reels constituting the reel group has two or three steel cords wound. Also, the steel cord is a single-wire steel cord.

In the pulling-out step, the two or three steel cords wound on each of the reels constituting the reel group can be pulled out from the reel group by the steel cord supplying device.

The arranging step can arrange, for the steel cord group as the multiple steel cords pulled out from the reel group (i.e., the multiple reels), the steel cords constituting the steel cord group in a row in a cross section perpendicular to the longitudinal direction of the steel cords.

The rubber composite manufacturing step embeds the steel cord group, namely, the multiple steel cords, in rubber, and thus, the rubber composite can be manufactured.

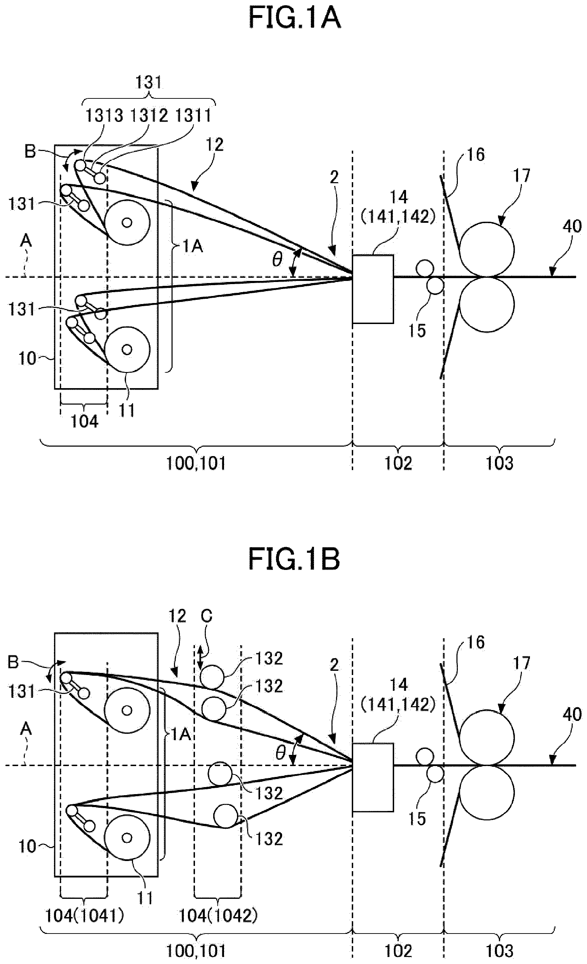

In the following, the respective steps will be described with reference to FIGs. 1A to 6C.

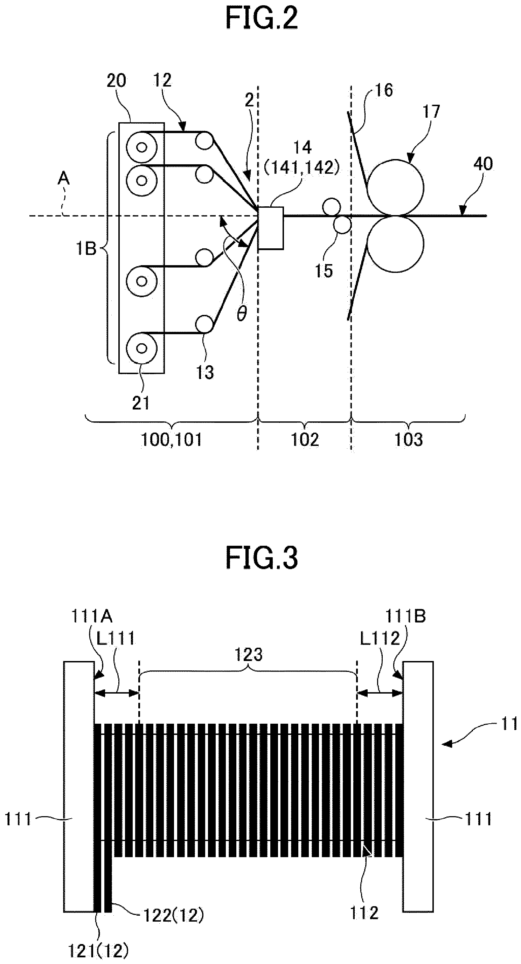

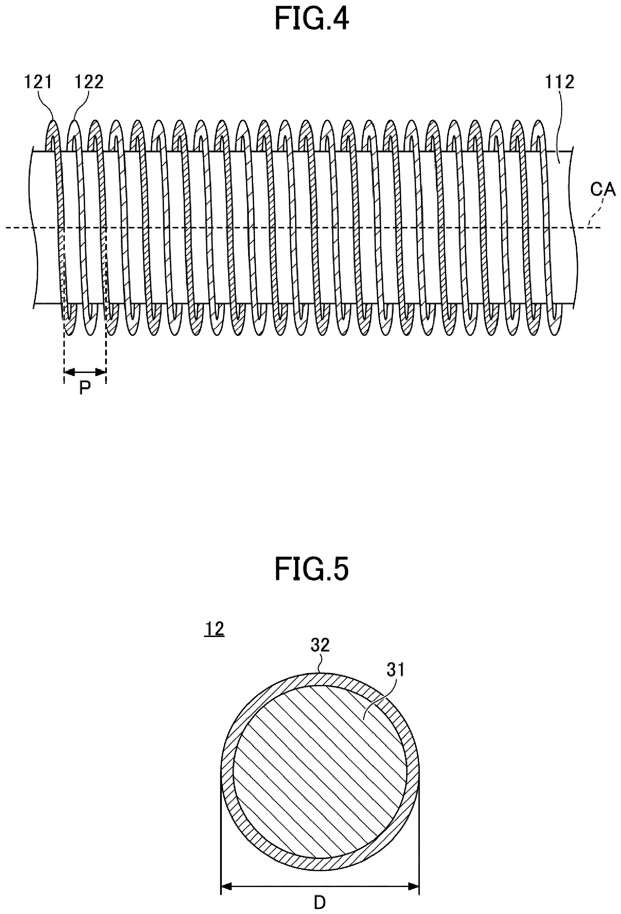

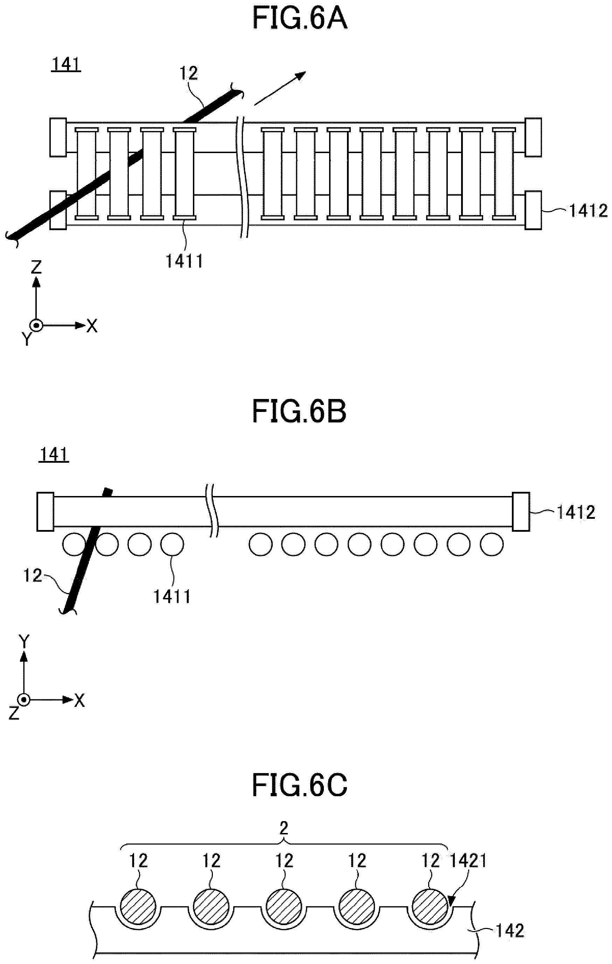

FIGs. 1A and 1B are schematic diagrams illustrating manufacturing methods of the rubber composite of the present embodiment. FIG. 2 is a diagram schematically illustrating a conventional method of manufacturing a rubber composite. FIG. 3 is an explanatory diagram of a reel having steel cords wound that can be used favorably in the method of manufacturing the rubber composite of the present embodiment. FIG. 4 is an explanatory diagram of a winding pitch of steel cords. FIG. 5 is a cross sectional view of a steel cord. FIGs. 6A to 6C are explanatory diagrams of a composite roll and one configuration example of a guide plate included in the arranging device used in the arranging step.

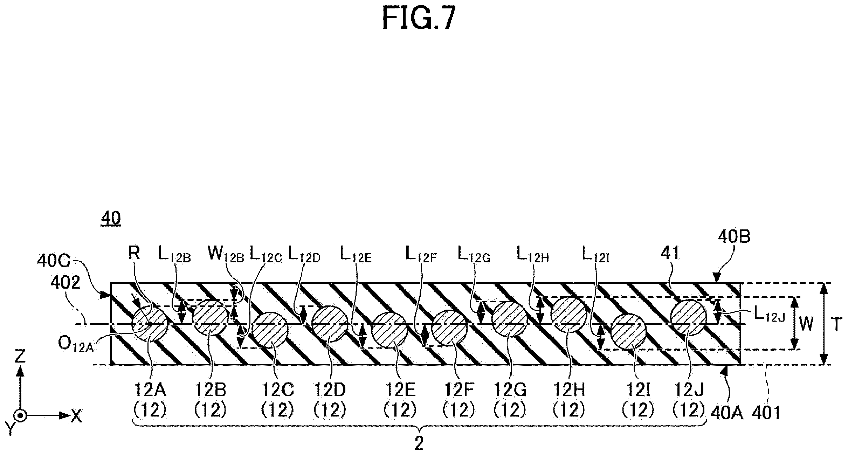

Note that a rubber composite to be manufactured by the method of manufacturing the rubber composite of the present embodiment has a cross section perpendicular to the longitudinal direction of steel cords when included that has a structure as illustrated in FIG. 7, as will be described in detail later. Specifically, as in the rubber composite 40 illustrated in FIG. 7, steel cords 12 constituting a steel cord group 2 are arranged in a row along the X-axis in the figure, and the steel cord group 2, namely, the multiple steel cords 12, have a structure embedded in rubber 41.

(1) Reel installation step

As illustrated in FIGs. 1A and 1B, in a reel installation step 100, a reel group 1A as multiple reels 11 can be installed in a steel cord supplying device 10. The steel cord supplying device 10 is a device that controls rotation of the reels 11, and supplies steel cords 12 wound around each reel 11 from each of the reels 11. The steel cord supplying device 10 may also be referred to as a reel supply or the like. In FIG. 1, an aspect is illustrated in which one steel cord supplying device 10 capable of installing multiple reels 11 is used, the aspect is not limited as such; individual steel cord supplying devices 10 independent from each other can also be used for the respective reels 11.

Although only two reels 11 are shown in FIGs. 1A and 1B as illustrated schematically, depending on the number of the steel cords 12 included in the rubber composite to be manufactured, in the reel installation step 100, further more multiple reels 11 can be installed in a direction perpendicular to the paper or the like.

As described above, aiming at reducing the weight of a tire, a single-wire steel cord having a smaller cord diameter is used instead of a steel cord of twisted wires. In addition, in the case of using the single-wire steel cord, from the viewpoint of ensuring the strength of the tire, it is necessary to increase the number of steel cords per unit width of the rubber composite.

However, in order to manufacture a rubber composite having an increased number of steel cords per unit width, the number of reels that supply steel cords needs to be increased. Therefore, there has been a problem such that expansion of a factory and improvement of facilities are required.

In contrast, in the method of manufacturing the rubber composite of the present embodiment, one reel is wound with two or three steel cords. Therefore, the number of reels can be half or one-third of the number of steel cords to be used. Therefore, the number of reels used for supplying steel cords can be suppressed, and without expanding the factory or improving facilities, the number of steel cords per unit width of the rubber composite can be increased.

Also, the two or three steel cords 12 wound around each reel 11 may have the same length. In this case, loss of steel cords when replacing a reel can be suppressed.

Each reel 11 has a single-wire steel cord wound as a steel cord 12. By using the single-wire steel cord, the cord diameter can be suppressed compared to the case of using a steel cord of twisted wires; therefore, the thickness of a rubber composite can be suppressed, and the weight can be reduced. Therefore, the weight of a tire using the rubber composite can also be lighter.

As illustrated in FIG. 2, according to the conventional method of manufacturing a rubber composite, in which one steel cord 12 is wound around one reel 21, in the case of manufacturing a rubber composite having an increased number of steel cords per unit width, the number of reels 21 each having a single steel cord wound increases. In other words, the number of reels constituting a reel group 1B increases. Therefore, the degree of freedom of locations where the reels 21 can be installed becomes lower. As a result, the distribution width of the incoming angle θ in the conventional method of manufacturing the rubber composite illustrated in FIG. 2 is wider than the distribution width of the incoming angle θ in the method of manufacturing the rubber composite of the present embodiment illustrated in FIGs. 1A and 1B. Therefore, in some cases, part of the steel cords 12 were scratched on their surfaces or the plating was peeled off. Also, there have been cases where, during the course of manufacturing a rubber composite, the position of the steel cord 12 supplied to the arranging device 14 is fluctuated. Further, for the steel cord supplying device 20, it has been necessary to increase the number of ports in which the reels 21 are installed in order to correspond to the increased number of reels 21.

In contrast, according to the method of manufacturing the rubber composite of the present embodiment, as described above, by suppressing the number of reels 11 to be used, the degree of freedom of locations where the reels 11 are installed is increased. Therefore, in an arranging step 102 that will be described later, the incoming angle θ upon inserting the steel cord 12 into the arranging device 14 can be easily selected. As a result, scratches on the surface of the steel cord 12 and peeling of the plated film can be suppressed. Also, during the course of manufacturing a rubber composite, fluctuation of the position of the steel cord 12 supplied to the arranging device 14 can be suppressed, and the steel cord 12 can be supplied to a stable position.

The incoming angle θ described above means, as illustrated in FIG. 1A, 1B, and 2, an angle between the steel cord 12 before being supplied to the arranging step 102 and the steel cord 12 after having been arranged in the arranging step 102. In other words, the incoming angle θ is an angle formed by the steel cord 12 immediately before being inserted into the arranging device 14, and a dotted line A in FIGs. 1A and 1B. Note that in the case of FIG. 2, the incoming angle θ can also be regarded as an angle between the steel cord 12 after the direction has been changed by a guide roll 13 and before being inserted into the arranging device 14, and the steel cord 12 after having been arranged in the arranging device 14.

In FIGs. 1A, 1B, and 2, due to the width of paper, although θ is attached to a location where the incoming angle θ takes the maximum value among incoming angles θ of the steel cords 12 to be inserted into the arranging device 14, the incoming angle θ can be obtained for each of the steel cords 12 .

It is favorable that the incoming angle θ described above is, for example, less than 50 degrees, and is more favorable to be less than or equal to 48 degrees. This is because by setting the incoming angle θ to be less than or equal to 50 degrees, scratches of the steel cord 12 and peeling of the plated film can be particularly suppressed. This is also because occurrences of a phenomenon called twisted wire in which a steel cord comes to have a twist or the like, can be suppressed.

Also, it is favorable that the incoming angle θ described above is greater than or equal to 40 degrees, and is more favorable to be greater than or equal to 42 degrees. This is because by setting the incoming angle θ described above to be greater than or equal to 40 degrees, steel cords can be stably supplied to the arranging device 14.

The method of winding steel cords 12 around the reel 11 that is used in the method of manufacturing the rubber composite of the present embodiment, is not limited in particular. For example, as illustrated in FIGs. 3 and 4, two steel cords 12 of a first steel cord 121 and a second steel cord 122 can be spirally wound together along a shaft 112 of the reel 11. The steel cord 12 can be wound around the shaft 112 of the reel 11, so as to form multiple layers. Although FIGs. 3 and 4 illustrate an example in which two steel cords 12 are wound together around the shaft 112 of the reel 11, even in the case of three steel cords 12, similarly, these three can be wound along the shaft 112 of the reel 11 simultaneously.

Also, in FIG. 3, although guards 111 are provided at, for example, only both ends of the shaft 112 of the reel 11, multiple guards 111 may be provided on the shaft 112 of the reel 11, so that the guards 111 partition the shaft 112 according to the number of steel cords to be wound on the reel 11. In this case, for example, one steel cord can be wound in each region partitioned by the guards 111 of the shaft 112.

As described above, although the reel 11 used in the method of manufacturing the rubber composite of the present embodiment can have two or three steel cords wound around it, it is especially favorable that the reel 11 has two steel cords wound around it. As described above, by setting the number of steel cords wound around the reel, the length of each steel cord can be sufficiently long, and thereby, the frequency of reel replacement can be suppressed.

A winding pitch P upon winding the steel cord(s) 12 on the shaft 112 of the reel 11, is not limited in particular, and can be selected appropriately so that a desired length of the steel cord(s) 12 can be wound. The winding pitch P means a length when the steel cord 12 is wound once around the shaft 112 of the reel 11. The length described above means a length along the central axis (CA) of the reel 11 (see FIG. 4).

It is favorable that the cord diameter D of the steel cord 12 is greater than or equal to 0.20 mm and less than or equal to 0.45 mm, and more favorable to be greater than or equal to 0.25 mm and less than or equal to 0.40 mm. The reason why the ranges described above are favorable for the cord diameter D of the steel cord 12 will be described later.

As illustrated in FIG. 5, the cord diameter D of the steel cord 12 means a diameter in cross section perpendicular to the longitudinal direction of the steel cord 12. It is favorable that the cord diameter D of the steel cord 12 is a mean of the measured value in three cross sections perpendicular to the longitudinal direction of the steel cord 12. In the case where the mean is calculated by measuring the cord diameter D with a micrometer in three cross sections perpendicular to the longitudinal direction of the steel cord, although depending on the length of the test piece of the steel cord 12, it is favorable that the distance between adjacent cross sections is greater than or equal to 1 cm and less than or equal to 5 cm.

The material of the steel cord 12 is not limited in particular; for example, as illustrated in FIG. 5, the steel cord 12 can have a configuration that is formed of a steel wire 31 and a plating film 32 applied to the surface of the steel wire 31. The steel wire 31 and the plating film 32 will also be described later.

(2) Pulling-out step

As illustrated in FIGs. 1A and 1B, in a pulling-out step 101, the steel cord supplying device 10 is capable of pulling out two or three steel cords 12 wound around each reel 11 simultaneously from the reel group 1A, namely, multiple reels 11.

In the pulling-out step, all steel cords 12 wound around each reel 11 can be pulled out simultaneously. In other words, in the case where two steel cords are wound around each reel 11, the two steel cords 12 can be pulled out simultaneously. Therefore, in the pulling-out step 101, for example, a number of steel cords 12 can be pulled out where the number is obtained by multiplying the number of reels constituting the reel group 1A by the number of steel cords 12 wound around each reel.

The steel cord 12 pulled out in the pulling-out step can be supplied to the arranging step. Note that in order to adjust the conveying direction of the steel cord 12, a guide roll (not illustrated) may be provided on the conveying path of the steel cord 12 as necessary.

In the method of manufacturing the rubber composite of the present embodiment, it is favorable that tension is applied to the steel cord 12 to be supplied to the arranging step. For example, when supplying to the arranging step, it is favorable that the ratio of tension per steel cord 12 to the breaking load per steel cord is greater than or equal to 6.0% and less than or equal to 9.0%; more favorable to be greater than or equal to 6.0% and less than or equal to 8.5%; and further favorable to be greater than or equal to 6.5% and less than or equal to 8.5%.

The tension per steel cord 12 means tension applied to each steel cord 12, and the tension can be adjusted by a device provided on the manufacturing line that pulls steel cord, or as necessary, by executing a tension adjusting step that will be described later.

When supplying to the arranging step, by setting the tension to be applied to the steel cord 12 to be greater than or equal to 6.0% of the breaking load per steel cord, the position of the steel cord 12 is stabilized in the arranging step 102 and in a rubber composite manufacturing step 103 that will be described later, and it becomes easier to be aligned with a desired position.

This is because the position becomes less likely to be displaced, and becomes stable as an appropriate tension is applied to the steel cord 12 supplied into the arranging step, even when an external force is applied to the steel cord 12.

As described above, by stabilizing the position of the steel cord 12, in the arranging step 102 and in the rubber composite manufacturing step 103, variations in the position of the steel cord in the thickness direction of a rubber composite can be suppressed in the manufactured rubber composite.

The thickness of the rubber composite is a value obtained by adding a distribution width of the steel cord 12 in the thickness direction of the rubber composite, to the rubber thickness determined in advance so that the steel cord 12 can be embedded. Therefore, by suppressing the variation of the position of the steel cord in the thickness direction of the rubber composite, the thickness of the rubber composite can be suppressed, and it becomes possible to reduce the weight of the rubber composite and of tires using the rubber composite.

Also, by stabilizing the position of the steel cord 12, it becomes unnecessary to apply an excessive force of the steel cords 12 to arrange the steel cord 12 in the arranging step 102. Therefore, scratches on the surface of the steel cord 12 and peeling of the plated film can be suppressed.

However, if the tension per steel cord 12 is increased excessively, the burden on the reel 11 and the steel cord supplying device may be increased, and damage may occur. Therefore, it is favorable that the tension per steel cord 12 is less than 9.0% of the breaking load per steel cord as described above.

(3) Arranging step

As described above, in the pulling-out step 101, from the reel group 1A, the steel cord group 2 as multiple steel cords 12 can be pulled out.

In the arranging step 102, the steel cord group 2 pulled out from the reel group 1A in the pulling-out step 101 can be arranged in a row in a cross section perpendicular to the longitudinal direction of the steel cord 12 constituting the steel cord group 2.

As described above, for example, as illustrated in FIG. 7, in the rubber composite 40 to be manufactured, the steel cords 12 constituting the steel cord group 2 are arranged in a row along the X-axis in FIG. 7, and embedded in the rubber 41.

Here, before being embedded into the rubber 41, in the arranging step 102, the steel cords 12 constituting the steel cord group 2 can be arranged in a row. In the arranging step 102, the multiple steel cords 12 constituting the steel cord group 2 can be arranged in a row, for example, by the arranging device 14.

The configuration of the arranging device 14 is not limited in particular, and may include, for example, a composite roll 141 to align the conveying directions of the steel cords 12, and a guide plate 142 to arrange the steel cords 12 in a row.

Specifically, for example, as illustrated in FIGs. 6A and 6B, the composite roll 141 arranged in parallel crosses can be used. FIG. 6A illustrates a bottom view of the composite roll 141; and FIG. 6B illustrates a side view of the composite roll 141. The composite roll 141 may include first rolls 1411 placed in the first layer; and second rolls 1412 that are placed in the second layer stacking on the first layer, and cross orthogonally the first rolls 1411.

As illustrated in FIG. 6A, the steel cord 12 being conveyed can change the conveying direction into the Z-axis direction by contacting the surfaces of the first rolls 1411 and the second rolls 1412 to align the conveying direction. Although FIGs. 6A and 6B illustrate only one steel cord 12, multiple steel cords 12 are similarly supplied between the first rolls 1411, and by changing the conveying direction into the Z-axis direction by the second rolls 1412, the multiple steel cords 12 can be arranged along the X-axis.

Next, for example, as illustrated in FIG. 6C, multiple steel cords 12 constituting the steel cord group 2 can be arranged, for example, by being introduced into slits 1421 carved in advance in the guide plate 142. Also, the positions can be further adjusted and arranged with the grooved rolls 15 as necessary.

The method of manufacturing the rubber composite of the present embodiment applies a constant tension to the steel cord 12. Therefore, the steel cord 12 can be easily positioned in the arranging step.

Therefore, as illustrated in FIG. 6C, it is favorable to select the size of the slits 1421 carved into the guide plate 142 used in the arranging step 102, to be sufficiently larger than the size of the steel cord 12, so that the steel cord 12 does not normally contact the surface of the slit 1421. The same applies to the grooves formed on the grooved roll 15.

(4) Rubber composite manufacturing step

The rubber composite manufacturing step 103 embeds a steel cord group, namely, multiple steel cords, in rubber, and thus, a rubber composite can be manufactured.

Specifically, for example, a rubber composite 40 can be manufactured by placing a steel cord group 2, namely, multiple steel cords 12, between sheets of rubber 16, and executing a calendaring process by a calendar roll 17.

(5) Tension adjusting step

The method of manufacturing the rubber composite of the present embodiment may also have a tension adjusting step 104 between the pulling-out step 101 and the arranging step 102, to adjust the tension of the steel cord 12 as necessary.

By executing the tension adjusting step in this way, the tension of the steel cord supplied to the arranging step can be controlled in a desired range.

In the tension adjusting step 104, it is favorable to adjust the tension of the steel cord, for example, by changing the position of the tension adjusting roll in contact with the steel cord 12 being conveyed.

By changing the position of the tension adjusting roll in contact with the steel cords 12 being conveyed, the tension of the steel cords 12 can be easily controlled. Also, by using the tension adjusting roll, occurrences of scratches on the surface of the steel cord 12 can be suppressed.

For example, as illustrated in FIG. 1A, the tension of the steel cord 12 can also be adjusted by the first tension adjusting device 131 that includes a rotating shaft 1311, a dancer arm 1312, and a first tension adjusting roll 1313.

In the first tension adjusting device 131, the dancer arm 1312 and the first tension adjusting roll 1313 attached to the dancer arm 1312 are movable along directions indicated by a double headed arrow B, around the rotating shaft 1311 as the axis. Therefore, by having the first tension adjusting roll 1313 come into contact with the steel cord 12 pulled out from the reel 11, and controlling the position of the first tension adjusting roll 1313, the tension of the steel cord 12 can be adjusted.

Note that in FIG. 1A, although an example is illustrated in which the first tension adjusting device 131 is provided for each steel cord 12, the form is not limited as such. For multiple steel cords pulled out from one reel 11, the tension may be adjusted together by the first tension adjusting device 131.

The tension adjusting step may also have multiple steps. In other words, as illustrated in FIG. 1B, the tension adjusting step 104 may include at least a first tension adjusting step 1041 and a second tension adjusting step 1042.

In FIG. 1B, in the first tension adjusting step 1041, tension of the steel cords 12 pulled out from the reels 11 is adjusted by the first tension adjusting device 131 described above. Note that in FIG. 1B, although tension is adjusted for multiple steel cords 12 by one unit of the first tension adjusting device 131, the form is not limited as such; as in the case of FIG. 1A, the first tension adjusting device 131 may be provided for each steel cord 12.

In addition, in FIG. 1B, the tension is further adjusted for each steel cord 12 by a second tension adjusting device 132. The second tension adjusting device 132 includes a second tension adjusting roll illustrated in FIG. 1B, and is configured such that the second tension adjusting roll is movable upward and downward along a double headed arrow C in the figure. Therefore, the second tension adjusting device 132 can control the tension of the steel cord 12 by controlling the position of the second tension adjusting roll.

In this way, by having the tension adjusting step 104 include at least the first tension adjusting step 1041 and the second tension adjusting step 1042, namely, by executing the tension adjusting step in multiple steps, the tension of the steel cord 12 can be controlled more precisely.

In FIG. 1B, although an example is illustrated in which the tension of a steel cord 12 is adjusted in two steps, the form is not limited as such; the tension of the steel cord 12 may be adjusted in three steps or more.

[Method of manufacturing of tire]

Next, a method of manufacturing a tire of the present embodiment will be described.

The method of manufacturing the tire of the present embodiment includes a tire manufacturing step of manufacturing a tire using a rubber composite obtained from the method of manufacturing the rubber composite described above.

The rubber composite can be used for, for example, a belt layer or a carcass of a tire. Therefore, the rubber composite manufactured by the method of manufacturing the rubber composite described above, may be arranged at a position of, for example, the belt layer or the carcass, and combined with other components to manufacture a tire.

Except for using the rubber composite described above, the tire can be manufactured by a normal method of manufacturing the tire; therefore, detailed description will be omitted.

By the method of manufacturing the tire of the present embodiment, a tire that will be described later can be manufactured.

According to the method of manufacturing the tire according to the present embodiment, the rubber composite obtained by the method of manufacturing the rubber composite described above is used; therefore the weight of the tire to be manufactured can be reduced. Also, according to the method of manufacturing the rubber composite described above, scratches of the surface of the steel cord 12 and peeling of the plated film can be suppressed during the course of manufacturing the rubber composite. Therefore, the rubber composite is excellent in adhesiveness between the steel cord 12 and the rubber 41, and the durability of the tire using the rubber composite 40 can be improved.

[Rubber composite]

Next, the rubber composite of the present embodiment will be described.

The rubber composite of the present embodiment can be manufactured by the method of manufacturing the rubber composite described above. Therefore, part of the description will be omitted for the matters already described.

As illustrated in FIG. 7, the rubber composite 40 of the present embodiment includes a steel cord group 2 as multiple steel cords 12, and a rubber 41 embedding the steel cord group 2. Note that as the steel cord 12, a single-wire steel cord can be used as described above.

In addition, in a cross section perpendicular to the longitudinal direction of the steel cords 12 of the rubber composite 40, the steel cords 12 constituting the steel cord group 2 are arranged in a row. Also, in the cross section described above, the mean of the variation width of the position of the steel cord in the thickness direction of the rubber composite 40 can be controlled to be less than or equal to 0.016 mm.

In the following, members included in the rubber composite of the present embodiment will be described.

(1) Members included in the rubber composite (Steel cord)

As described above, the steel cord 12 is a single-wire steel cord, namely, one wire. It is favorable that the steel cord 12 is not applied with twisting along the longitudinal direction. In other words, it is favorable that the steel cord 12 is a straight steel cord.

It is favorable that a cross section of the steel cord 12 perpendicular to the longitudinal direction is circular. Here, "circular" does not mean a circle in a strict geometric sense, but includes those regarded as circular within a range of tolerance.

Although the cord diameter D of the steel cord 12 is not limited in particular, it is favorable to be greater than or equal to 0.20 mm and less than or equal to 0.45 mm, and more favorable to be greater than or equal to 0.25 mm and less than or equal to 0.40 mm.

By having the cord diameter D of the steel cord 12 less than or equal to 0.45 mm, the thickness of the rubber composite 40 can be particularly suppressed, and the weight of the rubber composite 40 and the tire using the rubber composite 40 can be particularly reduced. Also, by having the cord diameter D of the steel cord less than or equal to 0.45 mm, the number of steel cords that can be embedded in a rubber composite can be increased particularly higher. Therefore, the maneuverability and comfort of a passenger car equipped with tires using the rubber composite, can be improved. Further, compared to a steel cord of twisted wires having a greater cord diameter, the length of the steel cord that can be wound around the reel becomes longer; therefore, the frequency of replacing reels when manufacturing the rubber composite is reduced, and the productivity can be improved.

Also, by having the cord diameter D of the steel cord 12 greater than or equal to 0.20 mm, a sufficient breaking load can be provided, and the strength of the rubber composite 40 and tires using the rubber composite 40 can be improved sufficiently.

The material of the steel cord 12 is not limited in particular; for example, as illustrated in FIG. 5, the steel cord can have a configuration that is formed of the steel wire 31 and the plating film 32 arranged on the surface of the steel wire 31.

As the steel wire 31, a high carbon steel wire can be used favorably.

Also, as the plating film 32, for example, a plating film whose metallic components contain only Cu (copper) and Zn (zinc), namely, a brass plating film may be adopted; however, metallic components other than Cu and Zn may be further contained. The plating film 32 may further contain, for example, one or more species of elements selected from among Co (cobalt) and Ni (nickel) as the metallic components.

In other words, the steel cord can have a brass plating film including, for example, Cu and Zn on its surface. Also, the brass plating film described above may further contain one or more species of elements selected from among Co and Ni. Note that the brass plating film can be applied to, for example, the surface of a steel wire as described above.

By the steel cord having a brass plating film containing Cu and Zn, in the case where the steel cord is covered with rubber and vulcanized to form a rubber composite or a tire, an adhesive layer containing $Cu_2S$ can be formed on the rubber side relative to the interface between the steel cord and the rubber. Note that Zn has a function of promoting generation of $Cu_2S$. By having the adhesive layer formed, the adhesive strength between the steel cord and the rubber can be increased, and the rubber composite and tires that are particularly excellent in durability can be obtained.

Also, Co and Ni have greater ionization tendencies than Zn. Therefore, by the brass plating film further containing one or more species of elements selected from among Co and Ni, the one or more of elements selected from among Co and Ni above function as a sacrificial protection, or the synthetic potential of Cu and Zn becomes noble, and thereby, the corrosion resistance of the brass plating film can be improved. As a result, the adhesive strength of the steel cords and the rubber will be further improved, and the rubber composite and tire durability can be further improved.

(Rubber)

The rubber 41 of the rubber composite 40 can be manufactured by molding and vulcanizing a composition of the rubber as necessary.

The specific composition of the rubber can be selected depending on the application of tires to which the rubber composite of the present embodiment is applied, and the properties required for the tires, and is not limited in particular. The rubber can contain, for example, rubber components, sulfur, and a vulcanization accelerator.

It is favorable that the rubber components contain one or more species selected from among, for example, natural rubber (NR) and isoprene rubber (IR), by greater than or equal to 60 mass%; more favorable to contain the species by greater than or equal to 70 mass%; and further favorable to contain the species by 100 mass%.

This is because by having the ratio of the one or more species selected from among natural rubber and isoprene rubber greater than or equal to 60 mass%, the breaking strength of the rubber composite or the tire can be improved; and this is favorable.

As rubber components to be mixed and used with natural rubber and isoprene rubber, for example, one or more species selected from among stirene-butadiene rubber (SBR), butadiene rubber (BR), ethylene-propylene-diene rubber (EPDM), chloroprene rubber (CR), butyl rubber (IIR), and acrylonitrile-butadiene rubber (NBR) may be enumerated.

Sulfur is not limited in particular; for example, sulfur that is commonly used as a vulcanizing agent in the rubber industry, can be used.

Although the content of sulfur in the rubber is not limited in particular, it is favorable that the content is greater than or equal to 5 mass parts and less than or equal to 8 mass parts with respect to 100 mass parts of the rubber components.

This is because by having the ratio of sulfur with respect to 100 mass parts of the rubber components greater than or equal to 5 mass parts, the crosslinking density of the resulting rubber can be increased, and the adhesive strength of the steel cords and the rubber can be increased especially. Also, by having the ratio of sulfur with respect to 100 mass parts of the rubber components less than or equal to 8 mass parts, sulfur can be uniformly dispersed in the rubber, and blooming can be suppressed from occurring; and this is favorable.

The vulcanization accelerator is also not limited in particular; for example, a sulfenamidebased accelerator such as N,N'-dicyclohexyl-2-benzothiazolyl sulfenamide, N-cyclohexyl-2-benzothiazolyl sulfenamide, N-tert-butyl-2-benzothiazolyl sphenamide, N-oxydiethylene-2-benzothiazolyl sulfenamide, or the like is favorably used. Also, if desired, a thiazole-based accelerator such as 2-mercaptobenzothiazole, di-2-benzothiazolyl disulfide; a tyramine-based accelerator such as tetrabenzyltyraum disulfide, tetramethyltyraum disulfide, tetraethyltyraum disulfide, tetrakis(2-ethylhexyl)tyraum disulfide, or tetramethyltyraum monosulfide; or the like may be used.

The rubber composition used in the rubber composite of the present embodiment can be manufactured by kneading, heating, and extruding the respective components by a conventional method.

Also, it is favorable that the rubber of the rubber composite of the present embodiment contains one or more species selected from among a simple substance of cobalt and compounds including cobalt.

As the compounds including cobalt, cobalt organic acid and cobalt inorganic acid may be enumerated.

As the cobalt organic acid, for example, one or more species selected from among cobalt naphthenate, cobalt stearate, cobalt neodecanoate, cobalt rosinate, cobalt versatic acid, cobalt tall oil fatty acid, and the like may be favorably used. Note that the cobalt organic acid may be a complex salt in which part of the organic acid is replaced with boric acid.

As the cobalt inorganic acid, for example, one or more species selected from among cobalt chloride, cobalt sulfate, cobalt nitrate, cobalt phosphate, cobalt chromate may be favorably used.

In particular, it is more favorable that the rubber of the rubber composite of the present embodiment contains cobalt organic acid. This is because containing cobalt organic acid improves especially the initial adhesion performance between the steel cords and the rubber. Note that the initial adhesion performance means an adhesion performance between the steel cords and the rubber immediately after vulcanization during the course of manufacturing the rubber composite or tires.

Also, according to investigations conducted by the inventors of the present invention, by adding cobalt to the rubber, the ratio of $Cu_2S$ in the adhesive layer can be increased, and the adhesive strength between the steel cords and the rubber can be improved. In addition, in the case of using cobalt organic acid as the cobalt to be added, this tendency becomes prominent. Therefore, it is favorable that the rubber of the rubber composite of the present embodiment contains cobalt, in particular, cobalt organic acid, by which the rubber composite and tires that are particularly excellent in durability can be obtained.

Also, the rubber may contain any components other than the rubber components described above, sulfur, the vulcanization accelerator, cobalt, and the like. The rubber can also contain known additives for rubber, for example, a reinforcing agent (carbon black, silica, etc.), wax, an antioxidant, and the like.

(2) Structure of the rubber composite

As illustrated in FIG. 7, the rubber composite 40 of the present embodiment may include the steel cord group 2 as multiple steel cords 12, and the rubber 41 embedding the steel cord group 2. In FIG. 7, the Y-axis direction perpendicular to the paper is the longitudinal direction of the steel cords 12. In FIG. 7, the multiple steel cords 12 constituting the steel cord group 2 are arranged in a row along the X-axis direction corresponding to the width direction of the rubber composite 40. In FIG. 7, the Z-axis direction corresponds to the thickness direction of the rubber composite 40.

In the rubber composite 40 of the present embodiment, variations of the position in the thickness direction of the steel cords 12 constituting the steel cord group 2 included in the rubber composite 40 are suppressed. In addition, in the rubber composite 40 of the present embodiment, it is favorable that the mean of the variation width of the position of the steel cords 12 constituting the steel cord group 2 in the thickness direction of the rubber composite 40 is less than or equal to 0.016 mm, and more favorable to be less than or equal to 0.015 mm.

The mean of the variation width in the thickness direction of the rubber composite 40 of the multiple steel cords 12 constituting the steel cord group 2, can be measured and calculated in a cross section perpendicular to the longitudinal direction of the steel cord of the rubber composite 40, for example, in the cross section illustrated in FIG. 7, according to the steps described as follows.

A measurement area is selected in which 10 steel cords 12A to 12J are arranged consecutively within the cross section perpendicular to the longitudinal direction of the steel cord 12 of the rubber composite 40.

In addition, the rubber composite 40 is placed on a flat surface 401 so that a first surface 40A of the rubber composite 40 including the measurement area described above comes into contact with the flat surface 401. At this time, it is favorable to place a weight (not illustrated) on a second surface 40B positioned opposite to the first surface 40A of the rubber composite 40, so as to press the rubber composite 40 against the flat surface 401. Although the mass of the weight is not limited in particular, it is favorable to place the weight so that a load of 0.05 $kg/mm^2$ per unit area acts on the surface of the rubber composite 40 on which the weight is placed.

In the cross section perpendicular to the longitudinal direction of the steel cord 12 of the rubber composite 40, a reference line 402 is drawn that passes through a center $O_{12A}$ of the steel cord 12A positioned on a first end 40C side as one end among the two ends positioned in the width direction, namely, in the X-axis direction in FIG. 7. The reference line 402 is drawn to be parallel to the flat surface 401.

Next, for each of the steel cords 12B to 12J other than the reference steel cord 12A, the variation width of the position is measured along the thickness direction of the rubber composite 40.

The variation width of each steel cord 12 is determined by measuring the maximum length between the reference line 402 along the thickness direction, namely, in the Z-axis direction in FIG. 7 of the rubber composite 40, and an end of the steel cord 12, and subtracting the radius R of the steel cord 12 from the measured value. Note that as the Z-axis is perpendicular to the flat surface 401 and the reference line 402, the thickness direction may be referred to as a direction perpendicular to the reference line 402.

In the case of the variation width $W_{12B}$ of the steel cord 12B, the variation width is calculated by measuring a maximum length $L_{12B}$ among the distances between the reference line 402 and the outer periphery of the steel cord 12B along the thickness direction, namely, the Z-axis direction of the rubber composite 40, and subtracting the radius R of the steel cord 12 from the measured value. Similarly, for each of the steel cords 12C to 12J, the variation width can be calculated from the maximum length $L_{12C}$ to $L_{12J}$ and the radius R of the steel cord 12. The variation width of the steel cord 12A is 0.

The mean of the variation width measured for each of the steel cords 12A to 12J corresponds to the mean of the variation width of the position of the steel cord 12 in the thickness direction of the rubber composite 40.

In the case where the mean of the variation width of the position in the steel cord 12 in the thickness direction of the rubber composite 40 is less than or equal to 0.016 mm, it means that the distribution width of the steel cord 12 in the thickness direction of the rubber composite 40 is sufficiently suppressed.

As described above, the thickness T of the rubber composite 40 is a value obtained by adding the distribution width W of the steel cord 12 in the thickness direction of the rubber composite 40 to the rubber thickness determined in advance so that the steel cord 12 can be embedded. Therefore, by having the mean of the variation width of the position of the steel cord 12 in the thickness direction of the rubber composite 40 less than or equal to 0.016 mm, the thickness of the rubber composite 40 can be suppressed, and the weight of the rubber composite 40 and the tire using the rubber composite 40 can be reduced.

However, in the case where the mean of the variation width of the position of the steel cord 12 in the thickness direction of the rubber composite 40 is excessively suppressed, the productivity may decline. Therefore, it is favorable that the mean of the variation width described above is greater than or equal to 0.010 mm, and more favorable to be greater than or equal to 0.012 mm.

The number of the steel cords 12 embedded in the rubber composite 40 of the present embodiment is not limited in particular, and can be selected depending on the performance required for the rubber composite 40 and the tires using the rubber composite 40. Here, in a cross section perpendicular to the longitudinal direction of the steel cord 12 of the rubber composite 40 of the present embodiment, the number of steel cords present per 5-cm width of the rubber composite 40 is defined as "ends number". In this case, it is favorable that the ends number is, for example, greater than or equal to 60 cords per 5 cm and less than or equal to 100 cords per 5 cm, and more favorable to be greater than or equal to 60 cords per 5 cm and less than or equal to 95 cords per 5 cm.

By having the ends number of the rubber composite of the present embodiments less than or equal to 60 cords per 5 cm, the durability of the rubber composite and tires using the rubber composite can be particularly improved. By having the ends number less than or equal to 100 cords per 5 cm, the amount of rubber between the cords can be secured, and the comfort can be improved with respect to the tires using the rubber composite.

<Tire>

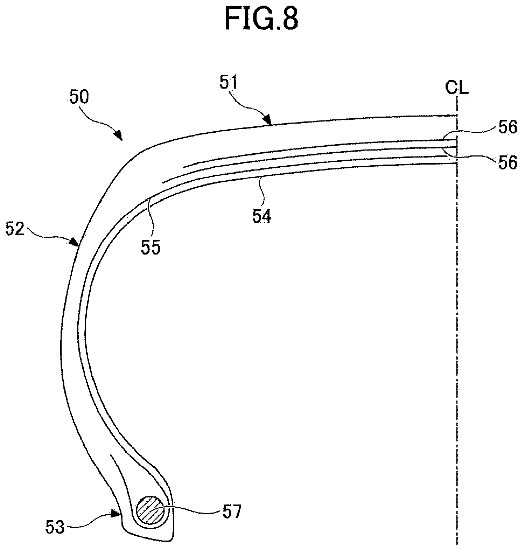

Next, a tire in the present embodiment will be described based on FIG. 8.

A tire of the present embodiment may include the rubber composite described above.

FIG. 8 illustrates a cross section in a plane perpendicular to the circumferential direction of a tire 50 of the present embodiment. Although FIG. 8 illustrates only the left part relative to the center line (CL), the tire continuously has a similar structure on the right side of the CL being the axis of symmetry.

As illustrated in FIG. 8, the tire 50 includes a tread portion 51, a side wall portion 52, and a bead portion 53.

The tread portion 51 is a portion that comes into contact with a road surface. The bead portion 53 is positioned on the inner diameter side of the tire 50 relative to the tread portion 51. The bead portion 53 is a portion that contacts the rim of a wheel of a vehicle. The side wall portion 52 connects the tread portion 51 and the bead portion 53. When the tread portion 51 receives an impact from the road surface, the side wall portion 52 deforms elastically to absorb the impact.

The tire 50 includes an inner liner 54, a carcass 55, a belt layer 56, and a bead wire 57.

The inner liner 54 is made of rubber, and seals a space between the tire 50 and the wheel.

The carcass 55 forms the framework of the tire 50. The carcass 55 is constituted with steel cords or organic fibers such as polyester, nylon, rayon, or the like, and rubber. The rubber composite 40 described above can also be used for the carcass 55.

The bead wire 57 is provided in the bead portion 53. The bead wire 57 receives tensile force acting on the carcass.

The belt layer 56 tightens the carcass 55 to improve the stiffness of the tread portion 51. In the example illustrated in FIG. 8, the tire 50 has two layers of the belt layer 56.

In addition, the tire 50 illustrated in FIG. 8 has two layers of the belt layer 56, and for example, for the belt layer 56, the rubber composite 40 described above illustrated in FIG. 7 may be used.

Although FIG. 8 illustrates the tire 50 having two layers of the belt layer 56, the form is not limited as such; the tire of the present embodiment may also have one layer, or three or more layers of the belt layer 56.

The tire according to the present embodiment uses the rubber composite 40 described above, and thereby, can make the weight of the tire lighter. Also, according to the rubber composite described above, scratches on the surface of the steel cord and peeling of the plated film are suppressed. Therefore, the rubber composite is excellent in adhesiveness between the steel cord and the rubber, and the durability of tires using the rubber composite can be improved.

As described above, although the embodiments have been described in detail, the implementation is not limited to any particular embodiment, and various variations and modifications can be made within the scope described the claims.

[Application examples]

Although specific application examples are listed and described below, the present invention is not limited to these application examples.

(Evaluation method)

First, an evaluation method of steel cords and a rubber composite made in the following experimental examples, will be described.

(1) Cord diameter D of steel cord

The cord diameter D of a steel cord was measured based on a micrometer method of JIS G 3510 (1992).

Specifically, the cord diameter D was measured with a micrometer in three cross sections perpendicular to the longitudinal direction of the steel cord, and the mean was calculated. Measurements were made on three cross sections 5 cm apart along the longitudinal direction of the steel cord 12.

(2) Ratio of tension per steel cord to the breaking load per steel cord

(2-1) Breaking load per steel cord

A load was applied using an autograph (model: AGS-H 10kN, manufactured by Shimadzu Corporation) to a steel cord along the longitudinal direction, and the load applied to the steel cord upon breaking was defined as the breaking load per steel cord.

(2-2) Tension per steel cord

A relationship between the operational control condition of the tension adjusting device installed on the line, and the tension of the steel cord 12 when supplying to the arranging step was measured in advance, by using a three-point roller mechanical tension meter (model: DX2-200, manufactured by IMADA Co., Ltd.). In other words, the value of tension applied to a steel cord when supplying to the arranging step was prepared so as to be calculated from the operational control condition of the tension adjusting device. In addition, for each experimental example, the operational control condition of the tension adjusting device was set so that the value of the tension per steel cord would take a desired value.

Note that before and after manufacturing the rubber composite of each experimental example, a measured value of the tension applied to the steel cord 12 was measured for multiple times. As a result, the deviation of the measured values from the calculated value described above was confirmed to be very small. Specifically, for the tension of the steel cord, it was confirmed that the deviation from the calculated value described above in the measured value was within $\pm 2.5\%$.

(2-3) Ratio of tension per steel cord to the breaking load per steel cord

From the tension per steel cord and the breaking load per steel cord obtained as above, the ratio of tension per steel cord to the breaking load per steel cord was calculated by the following formula. In Table 1 and Table 2, results are shown in a column of "Ratio of tension w.r.t. breaking load of steel cord".

```
(ratio of tension per steel cord to the breaking
load per steel cord)
= (tension per steel cord) ÷ (breaking load per
steel cord) × 100
```

(3) Mean of the variation width of the position of the steel cord in the thickness direction of the rubber composite

As illustrated in FIG. 7, a measurement area was selected in which 10 steel cords 12A to 12J were arranged consecutively in a cross section perpendicular to the longitudinal direction of the steel cord 12 of the rubber composite 40 prepared in each experimental example.

Then, the rubber composite 40 was placed on a flat surface 401 so that a first surface 40A of the rubber composite 40 including the measurement area described above came into contact with the flat surface 401. At this time, a weight having a load of 0.05 kg/mm$^2$ per unit area was placed on a second surface 40B positioned opposite to the first surface 40A of the rubber composite 40, so as to press the rubber composite 40 against the flat surface 401. As the weight, a plate-like weight whose surface facing the second surface 40B had the same area as the second surface 40B, was used. Note that a test specimen of the rubber composite was cut so as to include 10 steel cords 12A to 12J and so as to make the first surface 40A and the second surface 40B into square shapes, and used for an experiment.

In the cross section perpendicular to the longitudinal direction of the steel cord of the rubber composite 40, a reference line 402 was drawn that passed through a center $O_{12A}$ of the steel cord 12A positioned on a first end 40C side as one end among the two ends positioned in the width direction, namely, in the X-axis direction in FIG. 7. The reference line 402 was drawn to be parallel to the flat surface 401.

Next, for each of the steel cords 12B to 12J other than the reference steel cord 12A, the variation width of the position along the thickness direction of the rubber composite 40 was measured.

The variation width of each steel cord 12 was determined by measuring the maximum length between the reference line 402 along the thickness direction, namely, in the Z-axis direction in the figure of the rubber composite 40, and an end of the steel cord 12, and subtracting the radius R of the steel cord 12 from the measured value.

In the case of the variation width $W_{12B}$ of the steel cord 12B, the variation width was calculated by measuring a maximum length $L_{12B}$ among the distances between the reference line 402 and the outer periphery of the steel cord 12B along the thickness direction, namely, the Z-axis direction of the rubber composite 40, and subtracting the radius R of the steel cord 12 from the measured value. Similarly, for each of the steel cords 12C to 12J, the variation width was be calculated from the maximum length $L_{12C}$ to $L_{12J}$ and the radius R of the steel cord 12. The variation width of the steel cord 12A was 0. Note that as the radius R, half the value of the cord diameter D described above was used.

The mean of the variation width of the measured position of the steel cords 12A to 12J was set as the mean of the variation width of the position of the steel cord 12 in the thickness direction of the rubber composite 40. In Tables 1 and 2, results are shown in a column of "Variation width of position of steel cord in thickness direction of rubber composite".

(4) Scratch on the plated surface

A steel cord of 5 cm long was arbitrarily taken out of each rubber composite manufactured in the corresponding experimental example, to confirm the appearance of the steel cord with an optical microscope by hundredfold magnification. In the case where there was a scratch on the plated film of the steel cord due to rubbing or the like, the sample was evaluated as "Observed". In the case of no scratch described above, it was evaluated as "No" .

(5) Weight index

The weight of the rubber composite manufactured in each experimental example was measured, and the weight of the rubber composite obtained in Experimental Example 1-6 among Experimental Examples 1, and the weight of the rubber composite obtained in Experimental Example 2-4 among Experimental Examples 2 were normalized as 100, to represent the weight of the rubber composite prepared in each experimental example by the index. Note that the weight of the rubber composite of each experimental example was measured after preparing a test piece of the rubber composite of the experimental example so that the test piece had a width and a depth of both 50 mm. The width of the rubber composite means a length in the X-axis direction in FIG. 7 that corresponds to the direction in which multiple steel cords are arranged. Also, the depth of the rubber composite means a length in the Y-axis direction in FIG. 7 that corresponds to the length of the longitudinal direction of the steel cords. The test piece of the rubber composite of each experimental example includes a number of steel cords according to the ends number.

(Experimental Examples)

In the following, experiment conditions will be described.

[Experimental Examples 1]

Rubber composites were manufactured according to the following steps. Experimental Example 1-1 to Experimental Example 1-3 are application examples, and Experimental Example 1-4 to Experimental Example 1-6 are comparative examples.

[Experimental Example 1-1]

(Preparatory steps of steel cord and reel)

A steel cord before processing was prepared that was circular in cross section. The steel cord before processing had a configuration in which a brass plating film containing Cu and Zn as the metallic components was applied to the surface of a high carbon steel wire.
In addition, the steel cord before processing was supplied to a rolling device, to process the cord to have a cord diameter of 0.30 mm, and to be circular in a cross section perpendicular to the longitudinal direction as illustrated in FIG. 5. The cord diameter D was measured for the obtained steel cord according to the steps described above, and the result was 0.30 mm. The obtained steel cord was as illustrated in FIG. 5, including the steel wire 31 as the high carbon steel wire, and the plating film 32 as the brass plating film containing Cu and Zn to cover the steel wire 31.
Two strips of the obtained single-wire steel cord were wound around a single reel, to prepare reels to be used in manufacturing of a rubber composite. Note that the winding pitch of the steel cord on each reel was 0.6 mm.
The winding pitch P was measured according to the following steps. As illustrated in FIG. 3, ten turns of the first steel cord 121 were imaged in the measurement area 123 excluding 10-cm ranges designated with distances L111 and L112 inward from the first inner surface 111A and from the second inner surface 111B of the guards 111 of the reel 11.
Then, the length of ten turns of the first steel cord 121 along the central axis (CA) of the reel 11 (see FIG. 4) was measured and divided by ten to calculate the winding pitch P. Measurements were made in substantially the same way for the other experimental examples shown below.

(Reel installation step)

In Experimental Example 1-1, the rubber composite was manufactured according to the steps of the method of manufacturing the rubber composite illustrated in FIG. 1B. In addition, in the reel installation step, a reel group 1A as 40 of the prepared reels 11, was installed in the steel cord supplying device 10.

(Pulling-out step)

As illustrated in FIG. 1B, in the pulling-out step 101, by the steel cord supplying device 10, from the reel group 1A as 40 of the prepared reels 11, in total, 80 steel cords 12 wound around the reels 11 were pulled out simultaneously, and were conveyed and supplied to the arranging step 102 as will be described later.

The number of used reels was less than in Experimental Example 1-5 described below; therefore, the degree of freedom of the locations where the reels were installed was high, and thereby, the reels could be installed so that the incoming angle θ as an angle between the steel cord before and after supplying to the arranging step, was greater than or equal to 42 degrees and less than or equal to 48 degrees. Note that in Table 1 and Table 2, in notation like "42-48" in the column of the incoming angle, numerical values having "-" in-between mean the lower limit and the upper limits of the incoming angle. In addition, the incoming angle means an angle distributed within a range including the lower limit and the upper limit. Therefore, "42-48" described above means that the incoming angle is greater than or equal to 42 degrees and less than or equal to 48 degrees.

(Tension adjusting step)

When supplying to the arranging step 102, the ratio of tension of the steel cord 12 to the breaking load per steel cord was adjusted with the first tension adjusting device 131 and the second tension adjusting device 132 illustrated in FIG. 1B, so as to take the value shown in Table 1. In other words, between the pulling-out step 101 and the arranging step 102, the tension adjusting step 104 including the first tension adjusting step 1041 and the second tension adjusting step 1042 was executed. As the first tension adjusting device 131 and the second tension adjusting device 132 have already been described, the description is omitted here.

(Arranging step)

In the arranging step 102, 80 steel cords 12 pulled out from the reels 11 in the pulling-out step 101 were arranged in a row in a cross section perpendicular to the longitudinal direction of the steel cord 12.

Specifically, in the arranging step 102, the steel cord group 2 as the 80 steel cords 12 were pulled and aligned in predetermined directions by the composite roll 141 illustrated in FIGs. 6A and 6B, and then, were arranged by introducing into the slits 1421 carved in advance on the guide plate 142 illustrated in FIG. 6C. Also, the position of the steel cord 12 was further corrected by the grooved roll 15 placed downstream of the conveying direction of the steel cord 12, to execute arrangement.

The size of the slits 1421 carved into the guide plate 142 used in the arranging step 102, and of the grooves formed on the grooved roll 15, was selected to be sufficiently larger than the size of the steel cord 12, so that the steel cord 12 would not normally contact the slits 1421 and the surface of grooves.

(Rubber composite manufacturing step)

In the rubber composite manufacturing step 103, the steel cord group 2 as the 80 steel cords were embedded in rubber, to manufacture a rubber composite.

Specifically, the rubber composite 40 was manufactured by placing the steel cord group 2 as the 80 steel cords 12 between sheets of rubber 16 and executing a calendaring process by the calendar roll 17.

The rubber 16 described above was manufactured by the rubber composition including the rubber components and the additives. The rubber composition included 100 mass parts of natural rubber as the rubber component. In addition, the rubber composition contained, as the additives, with respect to 100 mass parts of the rubber components, 60 mass parts of carbon black, 6 mass parts of sulfur, 1 mass part of a vulcanization accelerator, 10 mass parts of zinc oxide, and 1 mass part of cobalt stearate as cobalt organic acid.

In a cross section perpendicular to the longitudinal direction of the steel cord of the rubber composite, denoting the number of steel cords present per 5-cm width of the rubber composite as the ends number, as illustrated in Table 1, the steel cords were arranged so that the ends number was 80 cords per 5 cm. The thickness T of the rubber composite was set to a value obtained by adding the distribution width W in the thickness direction of the plurality of steel cords placed in the rubber composite, to the rubber thickness set in advance so that the steel cords could be embedded.

Table 1 shows the evaluation results.

[Experimental Example 1-2 and Experimental Example 1-3]

When supplying to the arranging step, the tension adjusting device was set so that the ratio of tension per steel cord to the breaking load per steel cord took the value shown in Table 1. Except for the above point, the rubber composite was manufactured and evaluated in substantially the same way as in Experimental Example 1-1. Table 1 shows the evaluation results.

[Experimental Example 1-4]

When supplying to the arranging step, the tension adjusting device was set so that the ratio of tension per steel cord to the breaking load per steel cord took the value shown in Table 1. Except for the above point, the rubber composite was manufactured and evaluated in substantially the same way as in Experimental Example 1-1. Table 1 shows the evaluation results.

[Experimental Example 1-5]

Each reel was wound with a single steel cord. Note that the winding pitch of the steel cord on each reel was 0.6 mm.

In Experimental Example 1-5, the rubber composite was manufactured according to the steps of the method of manufacturing the rubber composite illustrated in FIG. 2. In addition, when supplying to the arranging step, the steel cord feeding device was set so that the ratio of tension per steel cord to the breaking load per steel cord took the value shown in Table 1.

A reel group as 80 reels described above was installed in the steel cord supplying device so that the same number of steel cords as in the other experimental examples could be supplied.

Note that improvement was made in advance to increase the number of ports as in the steel cord supplying device 20 illustrated in FIG. 2, so that 80 reels could be installed.

Except for the above points, the rubber composite was manufactured in substantially the same way as in Experimental Example 1-1. Then, the obtained rubber composite was evaluated. Table 1 shows the evaluation results.

[Experimental Example 1-6]

Instead of the single-wire steel cord, a steel cord of twisted wires having a $1 \times 2$ structure in which two cords of the steel cord used in Experimental Example 1-1 were twisted, was used. Also, each reel was wound with a single steel cord. Note that the winding pitch of the steel cord on each reel was 1.2 mm.

In addition, when supplying to the arranging step, the tension adjusting device was set so that the ratio of tension per steel cord to the breaking load per steel cord took the value shown in Table 1. The ends number of the rubber composite to be manufactured was set to 40 cords per 5 cm.

Except for the above points, the rubber composite was manufactured in substantially the same way as in Experimental Example 1-1. Then, the obtained rubber composite was evaluated. Table 1 shows the evaluation results.

[Table 1]

| Experimental examples | | | Ex. 1-1 | Ex. 1-2 | Ex. 1-3 | Ex. 1-4 | Ex. 1-5 | Ex. 1-6 |
|---|---|---|---|---|---|---|---|---|
| Steel cord | Type | [-] | Single wire | Single wire | Single wire | Single wire | Single wire | $1 \times 2$ Stranded wire |
| | Cord diameter | [mm] | 0.30 | 0.30 | 0.30 | 0.30 | 0.30 | 0.60 |
| Reel | Number of reels | [reels] | 40 | 40 | 40 | 40 | 80 | 40 |
| | Number of steel cords wound on one reel | [cords] | 2 | 2 | 2 | 2 | 1 | 1 |
| Ratio of tension w.r.t. breaking load of steel cord | | [%] | 6.2 | 8.0 | 8.7 | 5.0 | 5.0 | 5.0 |
| Incoming angle | | [degrees] | 42-48 | 42-48 | 42-48 | 42-48 | 30-60 | 42-48 |

(continued)

| Experimental examples | | | Ex. 1-1 | Ex. 1-2 | Ex. 1-3 | Ex. 1-4 | Ex. 1-5 | Ex. 1-6 |
|---|---|---|---|---|---|---|---|---|
| Rubber composite | Variation width of position of steel cord in thickness direction of rubber composite | [mm] | 0.014 | 0.012 | 0.013 | 0.020 | 0.035 | 0.015 |
| | Ends | [cords/5 cm] | 80 | 80 | 80 | 80 | 80 | 40 |
| | Scratch on plated surface | | No | No | No | No | Observed | No |
| | Weight index | [-] | 75 | 74 | 74 | 80 | 82 | 100 |

In Experimental Example 1-1 to Experimental Example 1-3, 80 steel cords were supplied to the manufacturing step, and compared to Experimental Example 1-5, it was confirmed that the number of reels used for supplying steel cords can be suppressed.

In Experimental Example 1-1 to Experimental Example 1-3, as illustrated in Table 1, when supplying to the arranging step, the ratio of tension per steel cord to the breaking load per steel cord was set to be greater than or equal to 6.0% and less than or equal to 9.0%, to manufacture the rubber composite.

In addition, in the rubber composites obtained in Experimental Example 1-1 to Experimental Example 1-3 described above, it was confirmed that the variation width of the position of the steel cord in the thickness direction of the rubber composites was suppressed, compared to the rubber composite obtained in Experimental Example 1-4 that used the reels not satisfying the above conditions. As a result, it was confirmed for the rubber composites obtained from Experimental Example 1-1 to Experimental Example 1-3 that the weight index was suppressed better than the rubber composite obtained in Experimental Example 1-4.

Also, in Experimental Example 1-5, the number of reels used was greater than in Experimental Example 1-1 to Experimental Example 1-3; therefore, it was confirmed that the degree of freedom of locations where the reels could be installed decreased, and the distribution of the incoming angle increased. As a result, it was confirmed that scratches were generated on the plating of the steel cords of the rubber composite obtained.

In Experimental Example 1-6, the twisted wires of a 1×2 structure were used as the steel cord; therefore, although the number of reels was suppressed, as the cord diameter of the steel cord itself became greater, it was confirmed that the weight index became greater.

[Experimental Examples 2]

Rubber composites were manufactured according to the following steps. Experimental Example 2-1 to Experimental Example 2-3 are application examples, and Experimental Example 2-4 and Experimental Example 2-5 are comparative examples.

[Experimental Example 2-1]

(Preparatory steps of steel cord and reel)

A steel cord before processing was prepared that was circular in cross section. The steel cord before processing had a configuration in which a brass plating film containing Cu and Zn as the metallic components was applied to the surface of a high carbon steel wire.

In addition, the steel cord before processing was supplied to a rolling device, to process the cord to have a cord diameter of 0.40 mm, and to be circular in a cross section perpendicular to the longitudinal direction as illustrated in FIG. 5. The cord diameter D was measured for the obtained steel cord according to the steps described above, and the result was 0.40 mm. The obtained steel cord was as illustrated in FIG. 5, including the steel wire 31 as the high carbon steel wire, and the plating film 32 as the brass plating film containing Cu and Zn to cover the steel wire 31.

Two strips of the obtained single-wire steel cord were wound around a single reel, to prepare reels to be used in manufacturing a rubber composite. Note that the winding pitch of the steel cord on each reel was 1.2 mm.

The obtained reels were evaluated as described above. Table 2 shows the evaluation results.

(Reel installation step)

In Experimental Example 2-1, the rubber composite was manufactured according to the steps of the method of manufacturing the rubber composite illustrated in FIG. 1B. In addition, in the reel installation step, a reel group 1A as 40 of the prepared reels 11, was installed in the steel cord supplying device 10.

(Pulling-out step)

As illustrated in FIG. 1B, in the pulling-out step 101, by the steel cord supplying device 10, from the reel group 1A as 40 of the prepared reels 11, in total, 80 steel cords 12 wound around the reels 11 were pulled out simultaneously, and were conveyed and supplied to the arranging step 102 as will be described later.

The number of used reels was less than in Experimental Example 2-4 described below; therefore, the degree of freedom of the locations where the reels were installed was high, and thereby, the reels could be installed so that the incoming angle $\theta$ as an angle between the steel cord before and after supplying to the arranging step, was greater than or equal to 42 degrees and less than or equal to 48 degrees.

(Tension adjusting step)

When supplying to the arranging step 102, the ratio of tension of the steel cord 12 to the breaking load per steel cord was adjusted with the first tension adjusting device 131 and the second tension adjusting device 132 illustrated in FIG. 1B, so as to take the value shown in Table 2. In other words, between the pulling-out step 101 and the arranging step 102, the tension adjusting step 104 including the first tension adjusting step 1041 and the second tension adjusting step 1042 was executed. As the first tension adjusting device 131 and the second tension adjusting device 132 have already been described, the description is omitted here.

(Arranging step)

In the arranging step 102, 80 steel cords 12 pulled out from the reels 11 in the pulling-out step 101 are arranged in a row in a cross section perpendicular to the longitudinal direction of the steel cord 12.

Specifically, in the arranging step 102, the steel cord group 2 as the 80 steel cords 12 were pulled and aligned in predetermined directions by the composite roll 141 illustrated in FIGs. 6A and 6B, and then, were arranged by introducing into the slits 1421 carved in advance on the guide plate 142 illustrated in FIG. 6C. Also, the position of the steel cord 12 was further corrected by the grooved roll 15 placed downstream of the conveying direction of the steel cord 12, to execute arrangement.

The size of the slits 1421 carved into the guide plate 142 used in the arranging step 102, and of the grooves formed on the grooved roll 15 was selected to be sufficiently larger than the size of the steel cord 12, so that the steel cord 12 does not normally contact the slits 1421 and the surface of grooves.

(Rubber composite manufacturing step)

In the rubber composite manufacturing step 103, the steel cord group 2 as the 80 steel cords were embedded in rubber, to manufacture a rubber composite.

Specifically, by the calendar roll 17, the steel cord group 2 as the 80 steel cords 12 were arranged between sheets of rubber 16, to which calendaring was applied to manufacture the rubber composite 40.

The same rubber 16 described above was used as in Experimental Example 1-1.

In this experimental example, steel cords were placed so that the ends number became 60 cords per 5 cm. The thickness T of the rubber composite was set to a value obtained by adding the distribution width W in the thickness direction of the plurality of steel cords placed in the rubber composite, to the rubber thickness set in advance so that the steel cords could be embedded.

Table 2 shows the evaluation results.

[Experimental Example 2-2 and Experimental Example 2-3]

When supplying to the arranging step, the tension adjusting device was set so that the ratio of tension per steel cord to the breaking load per steel cord took the value shown in Table 2. Except for the above point, the rubber composite was manufactured and evaluated in substantially the same way as in Experimental Example 2-1. Table 2 shows the evaluation results.

[Experimental Example 2-4]

As the reels for supplying to the reel installation step, each reel having one steel cord wound was used. Note that the winding pitch of the steel cord on each reel was 1.2 mm.

In Experimental Example 2-4, the rubber composite was manufactured according to the steps of the method of manufacturing the rubber composite illustrated in FIG. 2. In addition, the reel group as 80 reels described above was installed in the steel cord supplying device so that the same number of steel cords as in the other experimental examples could be supplied.

Note that improvement was made in advance to increase the number of ports as in the steel cord supplying device 20 illustrated in FIG. 2, so that 80 reels could be installed.

Except for the above points, the rubber composite was manufactured in substantially the same way as in Experimental Example 2-1. In addition, the obtained rubber composite was evaluated. Table 2 shows the evaluation results.

[Experimental Example 2-5]

The rubber composite was manufactured and evaluated in substantially the same way as in Experimental Example 2-1 except that the tension adjusting device was set so that the ratio of tension per steel cord to the breaking load per steel cord, took the value shown in Table 2. Table 2 shows the evaluation results.

[Table 2]

| Experimental examples | | | Ex. 2-1 | Ex. 2-2 | Ex. 2-3 | Ex. 2-4 | Ex. 2-5 |
|---|---|---|---|---|---|---|---|
| Steel cord | Type | [-] | Single wire | Single wire | Single wire | Single wire | Single wire |
| | Cord diameter | [mm] | 0.40 | 0.40 | 0.40 | 0.40 | 0.40 |
| Reel | Number of reels | [reels] | 40 | 40 | 40 | 80 | 40 |
| | Number of steel cords wound on one reel | [cords] | 2 | 2 | 2 | 1 | 2 |
| Ratio of tension w.r.t. breaking load of steel cord | | [%] | 6.2 | 8.0 | 8.7 | 6.2 | 5.0 |
| Incoming angle | | [degrees] | 42-48 | 42-48 | 42-48 | 30-60 | 42-48 |
| Rubber composite | Variation width of position of steel cord in thickness direction of rubber composite | [mm] | 0.014 | 0.012 | 0.013 | 0.035 | 0.020 |
| | Ends | [cords/5 cm] | 60 | 60 | 60 | 60 | 60 |
| | Scratch on plated surface | | No | No | No | Observed | No |
| | Weight index | [-] | 94 | 93 | 93 | 100 | 98 |

In Experimental Example 2-1 to Experimental Example 2-3, 80 steel cords were supplied to the manufacturing step, and compared to, for example, Experimental Example 2-4, it was confirmed that the number of reels used for supplying steel cords can be suppressed.

In Experimental Example 2-1 to Experimental Example 2-3, as illustrated in Table 2, when supplying to the arranging step, the ratio of tension per steel cord to the breaking load per steel cord is greater than or equal to 6.0% and less than or equal to 9.0%.

In addition, in the rubber composites obtained in Experimental Example 2-1 to Experimental Example 2-3 described above, it was confirmed that the variation width of the position of the steel cord in the thickness direction of the rubber composite was suppressed, compared to the rubber composite obtained in Experimental Example 2-5 that did not satisfy the above conditions. As a result, it was confirmed for the rubber composites obtained in Experimental Example 2-1 to Experimental Example 2-3 that the weight index was suppressed better than the rubber composite obtained in Experimental Example 2-5.

Also, in Experimental Example 2-4, the number of reels used was greater than in Experimental Example 2-1 to Experimental Example 2-3; therefore, it was confirmed that the degree of freedom of locations where the reels could be installed decreased, and the distribution of the incoming angle increased. As a result, it was confirmed that scratches were generated on the plating of the steel cords of the rubber composite obtained.

**Claims**

1. A method of manufacturing a rubber composite, the method comprising:

   a reel installation step of installing a reel group as multiple reels each having two or three steel cords wound, in a steel cord supplying device;
   a pulling-out step of pulling out the two or three steel cords wound on each reel by the steel cord supplying device, from the reel group;
   an arranging step of, for a steel cord group as multiple steel cords pulled out from the reel group, arranging the steel cords constituting the steel cord group in a row in a cross section perpendicular to a longitudinal direction of the steel cords; and
   a rubber composite manufacturing step of embedding the steel cord group into rubber to manufacture the rubber composite,
   wherein a steel cord is a single-wire steel cord, and
   **characterised in that**;
   when supplying to the arranging step, tension is applied to each of the steel cords that constitute the steel cord group, where the tension is greater than or equal to 6.0% and less than or equal to 9.0% of a breaking load per steel cord.

2. The method of manufacturing the rubber composite as claimed in claim 1, wherein the reel is wound with two steel cords.

3. The method of manufacturing the rubber composite as claimed in claim 1 or claim 2, the method further comprising: a tension adjusting step of adjusting the tension of the steel cord, between the pulling-out step and the arranging step.

4. The method of manufacturing the rubber composite as claimed in claim 3, wherein in the tension adjusting step, the tension of the steel cord is adjusted by changing the position of the tension adjusting roll in contact with the steel cord being conveyed.

5. The method of manufacturing the rubber composite as claimed in claim 3 or claim 4, wherein as the tension adjusting step, at least a first tension adjusting step and a second tension adjusting step are included.

6. The method of manufacturing the rubber composite as claimed in any one of claims 1 to 5, wherein an incoming angle as an angle between a steel cord before being inserted into the arranging step and the steel cord having been arranged at the arranging step is greater than or equal to 40 degrees and less than or equal to 50 degrees.

7. A method of manufacturing a tire, the method comprising:
   a tire manufacturing step of manufacturing the tire using the rubber composite obtained by the method of manufacturing the rubber composite as claimed in any one of claims 1 to 6.

**Patentansprüche**

1. Verfahren zur Herstellung eines Gummikompositen, wobei das Verfahren umfasst:

   einen Haspel-Installationsschritt des Installierens einer Haspel-Gruppe als mehrere Haspeln, die alle zwei oder drei gewickelte Stahlkorde aufweisen, in einer Stahlkord-Zufuhrvorrichtung;
   einen Auszieh-Schritt des Herausziehens der auf jede Haspel gewickelten zwei oder drei Stahlkorde durch die Stahlkord-Zufuhrvorrichtung aus der Haspel-Gruppe;
   einen Anordnungsschritt des, für eine Stahlkord-Gruppe als mehrere aus der Haspel-Gruppe herausgezogen Stahlkorde, Anordnen der die Stahlkord-Gruppe bildenden Stahlkorde in einer Reihe in einem Querschnitt rechtwinklig zu einer Längsrichtung der Stahlkorde; und
   einen Gummikompositherstellschritt des Einbettens der Stahlkord-Gruppe in Gummi zur Herstellung des Gummikomposits,

wobei ein Stahlkord ein Einzeldraht-Stahlkord ist, und

**dadurch gekennzeichnet, dass**

bei Zuführen zum Anordnungsschritt eine Spannung an jeden der Stahlkorde angelegt wird, welche die Stahlkord-Gruppe bilden, wobei die Spannung größer als oder gleich 6,0 % und kleiner als oder gleich 9,0 % einer Bruchlast pro Stahlkord ist.

**2.** Verfahren zur Herstellung des Gummikompositen gemäß Anspruch 1, wobei die Haspel mit zwei Stahlkorden bewickelt ist.

**3.** Verfahren zur Herstellung des Gummikompositen gemäß Anspruch 1 oder 2, wobei das Verfahren des weiteren umfasst:

einen Spannungsjustier-Schritt des Justierens der Spannung des Stahlkords zwischen dem Auszieh-Schritt und dem Anordnungsschritt.

**4.** Verfahren zur Herstellung des Gummikompositen gemäß Anspruch 3, wobei im Spannungsjustier-Schritt die Spannung des Stahlkords justiert wird, indem die Position der Spannungsjustier-Rolle in Kontakt zum Stallkord, der befördert wird, verändert wird.

**5.** Verfahren zur Herstellung des Gummikompositen gemäß Anspruch 3 oder 4, wobei als der Spannungsjustier-Schritt zumindest ein erster Spannungsjustier-Schritt und ein zweiter Spannungsjustier-Schritt enthalten sind.

**6.** Verfahren zur Herstellung des Gummikompositen gemäß einem der Ansprüche 1 bis 5, wobei ein Eintreffwinkel als ein Winkel zwischen einem Stahlkord vor Einführung in dem Anordnungsschritt und dem Stahlkord, der im Anordnungsschritt angeordnet worden ist, größer als oder gleich 40° und kleiner als oder gleich 50° ist.

**7.** Verfahren zur Herstellung eines Reifens, wobei das Verfahren umfasst:

einen Reifenherstell-Schritt des Herstellens des Reifens unter Verwendung des Gummikomposits, der durch das Verfahren zur Herstellung des Gummikomposits gemäß einem der Ansprüche 1-6 erhalten wird.


**Revendications**

**1.** Procédé de fabrication d'un composite de caoutchouc, le procédé comprenant :

une étape d'installation de bobine installant un groupe de bobines comme bobines multiples ayant chacune deux ou trois câbles en acier enroulés, dans un dispositif d'alimentation en câble en acier ;
une étape de retirage retirant les deux ou trois câbles en acier enroulés sur chaque bobine par le dispositif d'alimentation en câble en acier, du groupe de bobines ;
une étape d'arrangement, pour un groupe de câbles en acier comme câbles en acier multiples retirés du groupe de bobines, arrangeant les câbles en acier constituant le groupe de câbles en acier dans une rangée dans une section transversale perpendiculaire à une direction longitudinale des câbles en acier ; et
une étape de fabrication de composite de caoutchouc enterrant le groupe de câbles en acier dans du caoutchouc pour fabriquer le composite de caoutchouc,
dans lequel une câble en acier est une câble en acier à fil unique, et
**caractérisé en ce que** ;
lors de l'alimentation dans l'étape d'arrangement, une tension est appliquée à chacun des câbles en acier qui constituent le groupe de câbles en acier, où la tension est supérieure ou égale à 6,0 % et inférieure ou égale à 9,0 % d'une charge de rupture par câble en acier.

**2.** Procédé de fabrication du composite de caoutchouc selon la revendication 1, dans lequel la bobine est enroulée avec deux câbles en acier.

**3.** Procédé de fabrication du composite de caoutchouc selon la revendication 1 ou revendication 2, le procédé comprenant de plus :

une étape d'ajustement de tension ajustant la tension du câble en acier, entre l'étape de retirage et l'étape d'arrangement.

**4.** Procédé de fabrication du composite de caoutchouc selon la revendication 3, dans lequel dans l'étape d'ajustement de tension, la tension du câble en acier est ajustée en modifiant la position du rouleau d'ajustement de tension en contact avec le câble en acier qui est convoyé.

5. Procédé de fabrication du composite de caoutchouc selon la revendication 3 ou revendication 4, dans lequel comme l'étape d'ajustement de tension, au moins une première étape d'ajustement de tension et une seconde étape d'ajustement de tension sont incluses.

6. Procédé de fabrication du composite de caoutchouc selon l'une quelconque des revendications 1 à 5, dans lequel un angle entrant comme un angle entre un câble en acier avant d'être inséré dans l'étape d'arrangement et le câble en acier ayant été arrangé dans l'étape d'arrangement est supérieur ou égal à 40 degrés et inférieur ou égal à 50 degrés.

7. Procédé de fabrication d'un pneu, le procédé comprenant :
une étape de fabrication de pneu fabricant le pneu en utilisant le composite de caoutchouc obtenu par le procédé de fabrication du composite de caoutchouc selon l'une quelconque des revendications 1 à 6.

# FIG.1A

# FIG.1B

# FIG.2

# FIG.3

# FIG.4

121  122                                                                                                                            112

P

CA

# FIG.5

<u>12</u>

32

31

D

# FIG.6A

# FIG.6B

# FIG.6C

# FIG.7

EP 4 088 921 B1

# FIG.8

**EP 4 088 921 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61113799 U
- JP 63019404 U
- EP 3015599 A1